# EUROPÄISCHE PATENTANMELDUNG

(11) **EP 1 211 869 A1**
(43) Veröffentlichungstag der Anmeldung: **05.06.2002**
(21) Anmeldenummer: 00126197.3
(22) Anmeldetag: 30.11.2000
(51) Int. Cl.: H04M 1/02, H04N 7/14, H04N 5/225

(54) **Videokamera mit integriertem Beleuchtungssystem für mobile Kommunikationsendgeräte**

(71) Anmelder: SIEMENS AKTIENGESELLSCHAFT, 80333 München (DE)
(72) Erfinder: Andert, Markus, 81379 Muenchen (DE)

(57) **Zusammenfassung**

Die Erfindung betrifft ein Video-Kommunikationsendgerät (MF), insbesondere mobiles Endgerät, mit einer Kamera (KA), die einen Bildsensor (BS) und ein in einer Position dem Sensor (BS) vorgeschaltetes Infrarotfilter (IR) aufweist. Erfindungsgemäß weist das Endgerät (MF) eine Beleuchtungseinheit (BE) auf.

## Beschreibung

Die Erfindung betrifft ein Video-Kommunikationsendgerät gemäß dem Oberbegriff des Patentanspruchs 1.

Bei einer Videokommunikation lässt sich bei einem stationären Videotelefon die Beleuchtungssituation durch externe Lampen beeinflussen. Insbesondere bei mobilen Videotelefonen, den sogenannten Videohandies, ist die Beleuchtungssituation oftmals schlecht und lässt sich nur minimal beeinflussen.

Bei Filmaufnahmen mit herkömmlichen Videokameras werden im Allgemeinen sehr energieintensive Leuchten, in der Regel Halogenlampen, verwendet.

Der Erfindung liegt die Aufgabe zugrunde, die Bildaufnahme bei Videohandies zu verbessern.

Diese Aufgabe wird erfindungsgemäß durch die im Patentanspruch 1 angegebenen Merkmale gelöst.

Im Folgenden wird die Erfindung anhand eines in der Zeichnung dargestellten Ausführungsbeispieles beschrieben. Dabei zeigen
Figur 1 ein Mobilfunkgerät mit der erfindungsgemäß vorgesehenen Beleuchtungseinheit,
Figur 2 eine vergrößerte Darstellung derselben,
Figur 3 den schematischen Aufbau einer Kamera im Schnitt, und
Figur 4 und 5 zwei mechanische Varianten zur Bewegung eines Infrarotfilters.

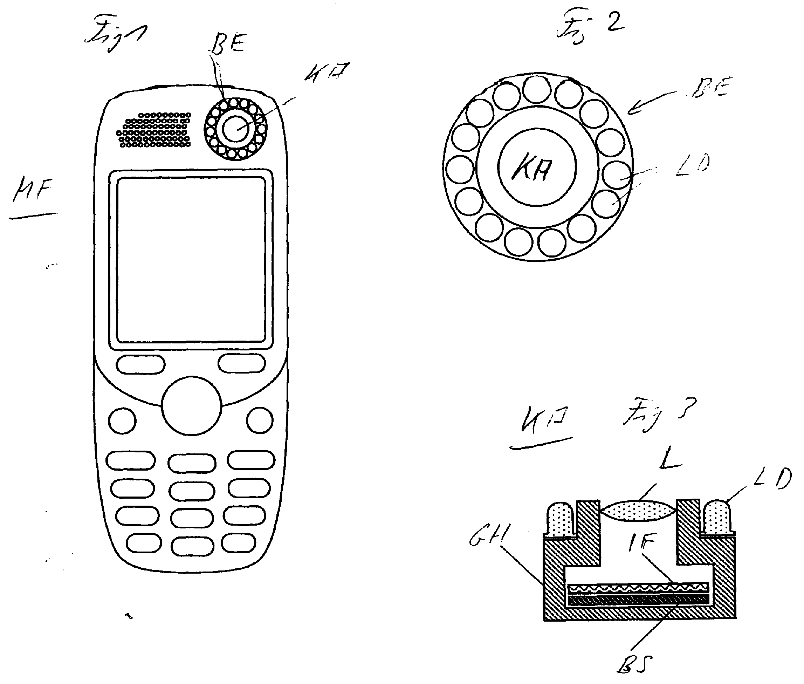

In Figur 1 ist ein Mobilfunkgerät MF dargestellt, das mit einer Kamera KA versehen ist. Ein solches Mobilfunkgerät MF kann zur Videotelefonie verwendet werden.

Erfindungsgemäß weist das Mobilfunkgerät MF eine Beleuchtungseinheit BE auf. Diese Beleuchtungseinheit BE kann, wie in Figur 1 dargestellt, in unmittelbarer Nähe der Kamera KA angeordnet sein.

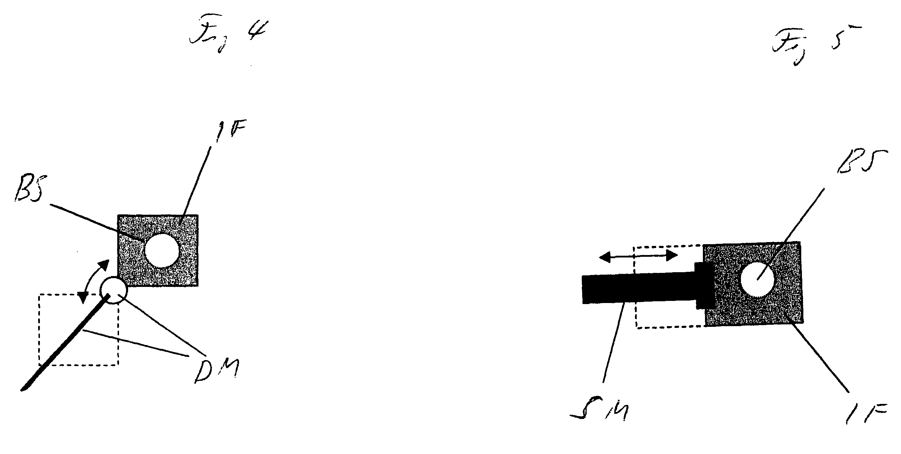

In Figur 2 ist vergrößert die Beleuchtungseinheit BE dargestellt. Bei einer Ausgestaltung der Erfindung besteht die Beleuchtungseinheit BE aus kreisförmig um die Kamera KA angeordneten Leuchtdioden LD. Bei einer weiteren Ausgestaltung der Erfindung werden Infrarot-Leuchtdioden verwendet.

In Figur 3 ist eine Kamera KA dargestellt, wie sie vorzugsweise bei Videohandies verwendet wird. Die Kamera KA weist ein Gehäuse GH auf, das in einer Eintrittsöffnung für das Licht eine Linse L besitzt. Das von der Linse L projizierte Bild fällt auf einen Bildsensor BS. In Bildaufnahmerichtung gesehen, ist dem Bildsensor BS ein Infrarotfilter IF vorgeschaltet.

Der Bildsensor BS ist beispielsweise durch einen sogenannten CCD-Chip realisiert.

Wie in der Schnittzeichnung in Figur 3 dargestellt, sind die Leuchtdioden LD der Beleuchtungseinrichtung BE um die Linse L herum angeordnet.

Wie bei einer Variante der Erfindung vorgesehen, können zur Beleuchtung Infrarotdioden eingesetzt werden. Insbesondere in diesem Fall wird das Infrarotfilter IF aus dem Strahlengang zum Bildsensor BS herausbewegt. Das Infrarotfilter IF, das sich in einer ersten Position zwischen Linse L und Bildsensor BS befindet, befindet sich in einer zweiten Position ausserhalb des Strahlenganges.

In Figur 4 ist der Fall dargestellt, bei dem das Infrarotfilter IF über einen Drehmechanismus DM bewegt wird.

In Figur 5 ist der Fall dargestellt, bei dem das Infrarotfilter IF über einen Schiebemechanismus SM bewegt wird.

Durch die Verwendung von energiearmen Infrarotleuchtdioden wird der Energieverbrauch des Systems auf ein Minimum reduziert. Da das Infrarotlicht im nichtsichtbaren Bereich des Lichtspektrums liegt, stellt eine solche Lichtquelle keine Störung für den Benutzer dar, auch wenn sein Gesicht beleuchtet wird.

Durch die ringförmige Anordnung der Leuchtdioden LD um die Kamera KA herum wird gewährleistet, dass ein aufgezeichnetes Objekt immer optimal ausgeleuchtet ist.

Das Infrarotbild, das vom Bildsensor BS und letztlich von der Kamera KA aufgezeichnet wird, ist bei der Realisierung des Bildsensors BS durch einen CCD-Chip ein Schwarzweissbild. Das ab- beziehungsweise zuschaltbare Infrarotfilter IF bietet somit die Möglichkeit, zwischen zwei Beleuchtungsmodi umzuschalten. Im ersten Modus, bei zugeschaltetem Sperrfilter, arbeitet die Kamera mit dem Umgebungslicht und liefert Farbbilder. Im zweiten Modus, bei abgeschalteten Sperrfilter, arbeitet die Kamera mit der Infrarot-Lichtquelle und liefert Schwarzweissbilder, die auch ungenügendem Umgebungslicht besser ausgeleuchtet sind. Die Auswahl der Beleuchtungsart kann hierbei manuell oder automatisch erfolgen.

## Patentansprüche

1. Video-Kommunikationsendgerät (MF), insbesondere mobiles Endgerät,
mit einer Kamera (KA), die einen Bildsensor (BS) und ein in einer Position dem Sensor (BS) vorgeschaltetes Infrarotfilter (IR) aufweist,
**dadurch gekennzeichnet, dass**
das Endgerät (MF) eine Beleuchtungseinheit (BE) aufweist.

2. Video-Kommunikationsendgerät nach Anspruch 1,
**dadurch gekennzeichnet, dass**
die Beleuchtungseinheit (BE) Leuchtdioden (LD) aufweist.

3. Video-Kommunikationsendgerät nach Anspruch 2,
**dadurch gekennzeichnet, dass**
die Beleuchtungseinheit (BE) Infrarot-Leuchtdioden aufweist, und
das Infrarotfilter (IF) in eine weitere Position bewegbar ausgebildet ist, in der es dem Bildsensor (BS) nicht vorgeschaltet ist.

4. Video-Kommunikationsendgerät nach Anspruch 2, 3 oder 4,
**dadurch gekennzeichnet, dass**
die Leuchtdioden (LD) kreisförmig um die Kamera (KA) herum angeordnet sind.
